# EUROPEAN PATENT SPECIFICATION

(11) **EP 4 390 490 B1**
(45) Date of publication and mention of the grant of the patent: **29.10.2025**
(21) Application number: 22216035.0
(22) Date of filing: 22.12.2022
(51) Int. Cl.: G02B 6/46

(54) **MODULAR OPTICAL FIBRE ORGANIZER**
MODULARER GLASFASERORGANISATOR
ORGANISEUR MODULAIRE DE FIBRES OPTIQUES

(43) Date of publication of application: 26.06.2024
(73) Proprietor: Hexatronic UK, Gosport PO12 4LJ (GB)
(72) Inventor: ALGER, Matthew, David, Southampton, SO31 4LG (GB); STONE, Kieran, Gosport, Hampshire, PO12 4LJ (GB)
(74) Representative: Lind Edlund Kenamets Intellectual Property AB

(56) References cited:
- WO-A1-2019/123496
- WO-A1-2022/261373

## Description

### TECHNICAL FIELD OF THE INVENTION

The present application relates to an organizer for optical fibres. More specifically, example embodiments in this application relate to a modular optical fibre organizer for organizing optical fibres.

### BACKGROUND OF THE INVENTION

Fibre optical cables is the most efficient and reliable means for enabling highspeed and high-capacity data communication over large distances. A single optical fibre can be made very thin while still being able to confine optical signals that convey data at very high bitrates. As a single optical fibre is very thin and fragile, fibre optical cables are formed by collecting a plurality (such as eight, sixteen or even hundreds) of individual optical fibres inside a single cable jacket. While extremely high-capacity fibre optical cables are easy to handle and route from one location to another as they are formed as single unit it is often a labour-intensive task to access individual optical fibres of the cable to enable splicing, branching, or connecting one or more individual optical fibres to a client terminal.

To this end, different fibre optical splice organizers have been presented which feature an input opening for receiving a fibre optical cable and an internal organization volume within which the individual optical fibres can be managed and organized in a structured and space efficient manner.

A fibre optical splice organizer design which has proven to be effective and easy to work with is designs which utilizes a stack of individually pivotable splice trays (also called cassettes) wherein each splice tray defines individual routing paths and connectors for managing one or more optical fibres. The splice trays are often arranged in stacks which can be flipped through such that only one or two splice trays are accessible at a time, allowing fibre installation personnel to manage the optical fibres in structured manner, one optical fibre at a time, without risk of disrupting optical fibres which have already been managed and are hidden in other, currently not accessible splice trays. The splice trays are commonly mounted against a central frame wherein fibres are routed to and from individual splice trays along the frame. Additionally, by ensuring that the optical fibres enter each splice tray at or near the pivot axis of each splice tray, there is little to no strain imposed on the fragile optical fibres, even when the splice trays are pivoted.

The splice trays are housed inside a hermetically sealed enclosure and one or more output cable ports are provided for allowing the managed optical fibres to be routed to their respective destinations. WO 2022/261373 A1 discloses a fibre optic assembly comprising a stack of pivotable splice trays in a sealed enclosure.

While fibre organizers with pivotable splice trays are a space efficient and easy-to-use solution for accessing and managing optical fibres, it is difficult to provide a single organizer unit which meets all needs of each location where optical fibres are to be managed without the organizer unit being grossly over-dimensioned. For instance, an organizer unit with hundreds of pivotable splice trays will be thoroughly under-utilized at a management location where only five or ten optical fibres are to be accessed and managed.

### GENERAL DISCLOSURE OF THE INVENTION

It is a purpose of the present invention to provide an enhanced optical fibre management system which overcomes at least some of the shortcomings mentioned in the above.

According to a first aspect of the invention there is provided an optical fibre organizer comprising a support structure arranged in a first plane spanned by a vertical and a horizontal axis. A first frame is mounted to the support structure, wherein the first frame extends in a frame plane being parallel to the first plane, the first frame having a plurality of splice tray holders arranged on a front surface of the frame, the splice tray holders being configured to pivotably engage a splice tray and enable the splice tray to pivot around a pivot axis parallel with the horizontal axis. The arrangement further comprises a fibre router, the fibre router comprising attachment means for releasable attachment to the splice tray holders of the first frame, the fibre router further comprising, a base plate extending parallel to the first frame when the fibre router is attached to the first frame and a lower and upper wall attached to vertical edges of the base plate wherein the lower and upper wall are separated along the vertical axis to define a fibre routing channel along the horizontal axis.

The support structure is either a support board or formed of elongated support members to which, or between which, the first frame is attached. If the support structure is elongated support members, the first frame is located on either a front side or opposite rear side of the first plane. If the support structure is a support board the first frame is arranged on the front side of the support board. The first frame is substantially planar, with splice tray holders arranged on a front surface of the first frame. The opposite back surface is mounted against support members or the support board.

The present invention is at least partially based on the understanding that with a fibre router the optical fibre organizer is provided with extra routing, and storage, capabilities. With the base plate, lower wall and upper wall a confined volume is formed which is suitable for routing many cables or optical fibres along the horizontal axis in a plane. For example, a bundle of many cables could be retained in the cable router. The inventors have realized that traditional optical fibre storage arrangements often are lacking in fibre/cable storage and routing capabilities. To this end, a fibre router can be mated with the splice tray holders (originally adapted to pivotably hold splice tray holders) to enhance the fibre/cable routing capabilities without replacing the first frame.

In some implementations, the fibre router further comprises at least one retention lip protruding from one of the lower wall and upper wall and extending towards the other one of the lower wall and upper wall, wherein the retention lip is separated from the base plate along a depth axis, the depth axis being perpendicular to the horizontal axis and vertical axis. Thus, the fibre router is configured to at least partially cover the routed cables/fibres along the depth axis and the vertical axis so as to form a confined space for holding and retaining optical cables/fibres.

In some implementations, the first frame is mounted to the support structure via at least two support brackets, the at least two support brackets are releasably connected to the first frame.

In some implementations, the plurality of splice tray holders are separated along the vertical axis, wherein the attachment means of the fibre router are configured to engage at least two splice tray holders separated along the vertical axis.

For example, the splice tray holders are arranged to pivotably hold a stack of splice trays, with one arranged above or below another one. With a fibre router configured to attach to at least two vertically separated splice tray holders the fibre router is prohibited from pivoting around the pivot axis, allowing it to provide a fixed routing channel by connecting to splice tray holders traditionally arranged for pivotable engagement with splice trays. With this arrangement, router cables/fibres can be retained by the fibre router allowing installers of fibre optic cables to work more effectively with the optical fibre storage arrangement.

In some implementations, the first frame comprises at least one splice tray holder which remains free when the fibre router is attached to at least one other splice tray holder. Optionally, the free splice tray holder is pivotably attached to a fibre optic splice tray.

**In** this way, the optical fibre organizer becomes modular and reconfigurable to allow the optical fibre organizer to be configured to meet the current optical fibre routing requirements. For example, the first frame comprises at least three splice tray holders arranged with a separation distance along the vertical axis with the fibre routing being attached and retained to two neighbouring splice tray holders, leaving at least one splice tray holder free to pivotably retain a splice tray either above or below the fibre router. Accordingly, the splice trays can be used simultaneously with the fibre router, with e.g., the fibre router being arranged under, and at least partially covered along the depth axis, by one or more splice trays attached to splice tray holders above the fibre router. As the splice trays are pivotable, the splice trays can be pivoted away from the fibre router to give easy access to the fibre router and then pivoted back to at least partially cover the fibre router when it is no longer desirable to access the fibre router.

In some implementations, the optical fibre storage arrangement, further comprises a second frame mounted to the support structure and extending in the frame plane, the second frame being arranged vertically above or below the first frame. The second frame is detachably connected to a first splitter holder, and the first splitter holder is configured to hold at least one fibre splitter module.

One or more second frames and one or more first frames can thus be arranged together against the elongated support members. The first frame offers splice tray holders (for holding a fibre router and optionally one or more pivotable splice trays) while the second frame offers one or more splitter module holders for holding one or more fibre optical splitter modules in a substantially horizontal direction. Thus, the optical fibre organizer can further be tailored after the optical fibre routing needs. In one embodiment, the optical fibre organizer comprises both a first frame with a fibre router and at least one splice tray holder attached and a second frame with a fibre optical splitter module holder attached.

**In** some implementations, the first splitter module holder comprises a plurality of plates extending in a depth axis away from the second frame, the depth axis being perpendicular to the horizontal axis and the vertical axis. The plates are flexibly resilient and separated to define at least one vertical separation space so as to receive and reliantly hold a splitter module in the separation space. Optionally, the plates are C-shaped and attached to one or more protrusions of the splitter module holder.

With such a splitter module holder, many different types and sizes of splitter modules can be fitted to the same splitter module holder. As the plates are resilient, the splitter modules are reliably retained without damaging the splitter modules. As will be explained in the below each plate is preferably C-shaped, and not attached to the third frame or a base plate of the splitter module holder, to provide enhanced retention flexibility allowing the splitter module holder to retain an even wider selection of splitter modules.

In some implementations, the optical fibre organizer further comprises a second splitter module holder detachably connected to the second frame, the second splitter module holder being separated along the horizontal axis from the first splitter holder. Optionally, the second splitter module holder comprises a plurality of holder plates extending in a depth axis away from the second frame, the depth axis being perpendicular to the horizontal axis and vertical axis. The holder plates are resilient and separated to define at least one vertical separation space configured to receive and reliantly hold a splitter module in the separation space and wherein the holder plates of the first and second splitter holder are aligned to define a common vertical separation space extending horizontally to jointly hold a splitter module.

In some implementations, the support structure comprises a pair of elongated support members extending substantially in parallel along a vertical axis, wherein the support members are separated from each other along a horizontal axis such that the support members are arranged in a first plane spanned by the vertical and horizontal axes.

In some implementations, the optical fibre organizer further comprises a third frame mounted to the elongated support members and extending in a plane parallel to the frame plane, the third frame being arranged vertically above or below the first frame. The third frame comprises a plurality of adaptor apertures, each adaptor aperture being configured to receive a fibre optic adaptor, the fibre optic adaptor being configured to connect a terminated optical fibre connected to the fibre optic adaptor on a front side of the third frame to another terminated optical fibre connected to the fibre optic adaptor on a rear side of the third frame, the front side being opposite to the rear side.

The third frame can be used instead of, or in addition to, at least one of the first and the second frames. While the first frame offers retention of a fibre router, and optionally one or more splice trays, and the second frame offers retention of splitter modules the third frame offers fixation of fibre optic adaptors arranged in a grid in a plane parallel to the first plane. Whereas the first and second frame involves retention of optical splitter modules, cables or individual fibres on a same side (front or rear) of the respective frame, the third frame enables optical fibres on the front side of the third frame to connect to optical fibres on the rear side.

In some implementations, the third frame comprises a holding portion for connecting to a shield plate, wherein, when the shield plate is connected to the holding portion, the shield plate extends in a plane parallel to the frame plane on the front side of the third frame. The shield plate is arranged to cover the vertical and horizontal extent of the plurality of adaptor apertures. That is, a projection of the shield plate along the depth axis overlaps the adaptor apertures in full.

The optical fibre adaptors, and the connectorized optical fibres connecting to the adaptors, are arranged by the third frame so as to extend in the depth axis which offers easy access to optical fibre installation personnel. However, this also exposes the fragile optical fibres to some risk of breakage due to e.g. installation personnel coming into contact with the connectorized optical fibres when working with the optical fibre storage arrangement. To this end, the shield plate protects the fragile connection between the optical fibre connectors and the optical fibre adaptors. The protection is ensured by the shield plate covering at least some, preferably all, optical fibre adaptors along the depth axis.

In some implementations the optical fibre organizer further comprises a second pair of elongated support members extending substantially in parallel along the vertical axis, wherein the second support members are separated from each other along the horizontal axis such that the second support members are arranged in a second plane spanned by the vertical and horizontal axes separated along the depth axis from the first plane and an auxiliary shield holder, attached to at least one of the second support members, wherein, when the shield plate is connected to the auxiliary shield holder, the shield plate extends in a plane parallel to the frame plane on the rear side of the third frame and covers, along the depth axis, the plurality of adaptor apertures.

In some implementations, the support members are disposed inside a housing, wherein the housing comprises a base portion attached to a lower end of the support members, the base portion comprising at least one cable entrance opening and a housing shell having a closed end and an open end, wherein the open end is attached to the base portion.

To this end, the optical fibres can be sealed-off and protected from the environment.

In some implementations each frame comprises two detachable mounting brackets, the two mounting brackets being detachably mounted at the vertical sides of the frame, wherein the frame is mounted to a first support member at a first mounting bracket of the two mounting brackets and mounted to a second support member at a second mounting bracket of the two mounting brackets.

### BRIEF DESCRIPTION OF THE DRAWINGS

Aspects of the present invention will be described in more detail with reference to the appended drawings, showing currently preferred embodiments.
Fig. 1a depicts an optical fibre organizer according to some embodiments.
Fig. 1b shows the elongated support members of the optical fibre organizer according to some embodiments.
Fig. 1c shows a housing shell which is used to close the optical fibre organizer and protect it from the environment, according to some embodiments.
Fig. 1d is a front view of the optical fibre organizer showing the first, second and third types of frames according to some embodiments.
Fig. 1e depicts an optical fibre organizer with a plurality of first frames attached to the support members, wherein one first frame carries a cable router and another first frame carries a plurality of splice trays.
Fig. 2a shows a first frame for retaining splice trays and/or a cable router.
Fig. 2b depicts a support bracket for attaching the first and/or second frame to the support members.
Fig. 2c shows the support brackets mounted onto the first frame.
Fig. 2d shows a cable router according to some implementations.
Fig. 2e shows the first frame mounted to the support members.
Fig. 2f shows the first frame mounted to the support members and retaining a cable router in a non-pivotable position.
Fig. 2g depicts a lateral cable router according to some implementations.
Fig. 2h illustrates an example of a pivotable splice tray that is configured to be coupled to the first frame.
Fig. 3a depicts a second frame according to some embodiments.
Fig. 3b depicts a splitter module holder for attachment to the second frame according to some implementations.
Fig. 3c shows the second frame mounted to the support members according to some implementations.
Fig. 3d illustrates how a splitter module holder(s) retains a fibre optic splitter module.
Fig. 4a depicts a third frame for mounting fibre optic adaptors according to some implementations.
Fig. 4b depicts the third frame mounted to the support members according to some implementations.
Fig. 4c illustrates the third frame having been provided with a plurality of optical fibre adaptors.
Fig. 4d shows the third frame retaining a shield plate for protecting the connectorized optical fibres.
Fig. 4e shows shield plate holders for retaining a second shield plate on the opposite side of the third frame.
Fig. 5 illustrates an alternative optical fibre organizer wherein the first and/or second frame is mounted directly against a support surface instead of between two support members, according to some implementations.

### DETAILED DESCRIPTION OF CURRENTLY PREFERRED EMBODIMENTS

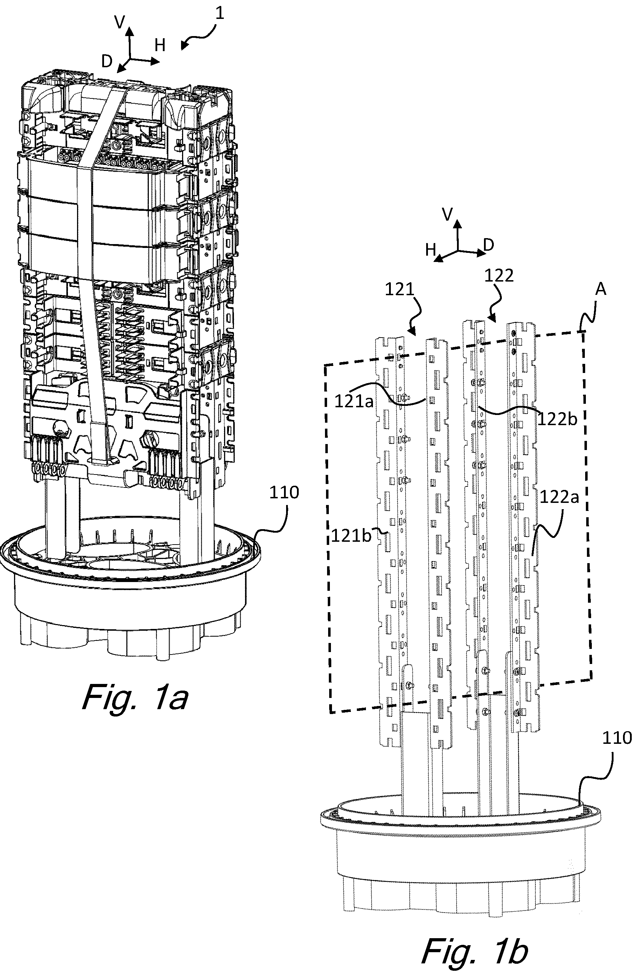

In the following, different exemplary embodiments will be presented with reference to the figures. Throughout this description references will be made to different directional axis that span a three-dimensional space (vertical, horizontal and depth axis). These directions are system centric and are merely used to describe how different components are place in relation to other components. Therefore, two components that are e.g. horizontally separated are not necessarily horizontally separated in an earth centric coordinate system when the optical fibre organizer is installed. Nevertheless, the directional axes are still in line with an earth centric coordinate system for many typical use cases. For instance, the optical fibre organizer 1 shown in fig. 1a is often kept upright (with the system centric vertical axis coinciding with the earth centric vertical axis) in the installed state although it is envisaged that the optical fibre organizer 1 may be oriented differently as well (e.g. lying down, wherein the system centric vertical axis will be in a horizontal plane of an earth centric coordinate system).

Fig. 1a depicts an optical fibre organizer 1 according to some implementations. With further reference to fig. 1b there is depicted a support structure comprising elongated support units 121, 122 which extend vertically from a base portion 110. The two elongated support units 121, 122 are arranged in a same horizontal H and vertical V plane and separated horizontally. The elongated support units 121, 122 are connected to the base portion 110 and may e.g., be made of metal whereas the base portion is made of polymer material, such as plastic.

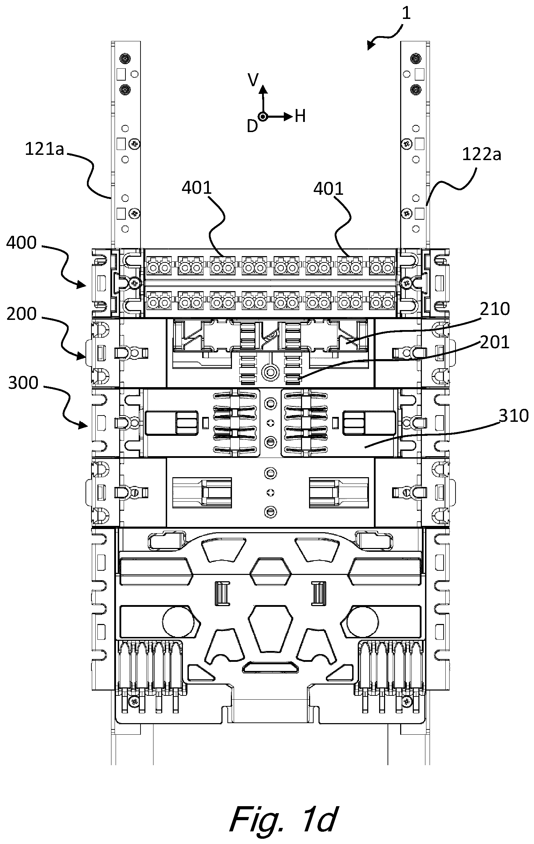

The optical fibre organizer 1 comprises one or more frames (see fig. 1d) mounted against the support units 121, 122 so as to span the horizontal H separation of the support members. The frames have different structures allowing different components for fibre cable routing and storage to be mounted onto the optical fibre organizer 1.

Each support unit 121, 122 is formed of one pair of elongated support members 121a, 121b, 122a, 122b as is shown in fig. 1b. That is, the first support unit 121 comprises a first pair of elongated support members 121a, 121b and the second support unit 122 comprises a second pair of elongated support members 122a, 122b. The support members 121a, 121b, 122a, 122b of each pair are separated along the depth axis D. To this end, each pair comprises a front support member 121a, 122a and a back support member 121b, 122b. Pairs of support members 121a, 121b, 122a, 122b are particularly beneficial as this facilitates installation of frames to both the front and back side of the optical fibre storage arrangement. Each support member is preferably realized as an L-section (when viewed along vertical axis V) elongated brackets as depicted in fig. 1b.

Although not shown in fig. 1b it is envisaged that each support unit 121, 122 comprises only one support member as opposed to a pair of support members. For instance, the optical fibre organizer 1 may be realized with only the front support members 121a, 122a.

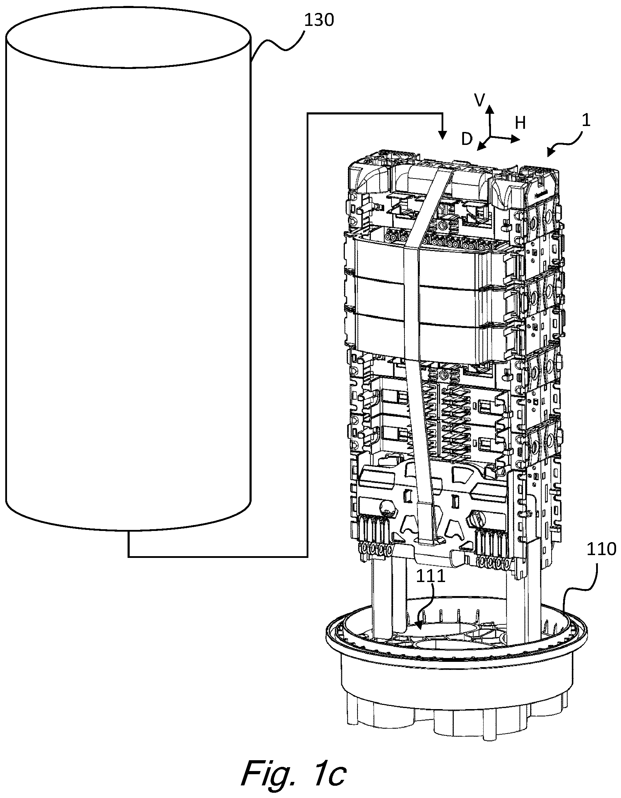

Once fibre installation and organization has been completed using the frames mounted to the support members 121a, 122a, 121b, 122b, the optical fibre organizer arrangement 1 is sealed inside a housing 130 as shown in fig. 1c. The base portion 110 is connected to an open end of the housing 130 using a seal wherein the housing 130 is sized and adapted to cover the entire fibre organizer arrangement 1. In some embodiments, the base portion 110 and the housing 130 are both substantially cylindrical. In some implementations, the housing 130 is fixed to the base portion 110 using a sealing ring (not shown). The optical fibre cables that are entering into and/or routed out of the sealing formed by the base portion 110 and the housing 130 are routed through cable entrance/exit ports 111 provided in the base portion 110. Preferably, the cables entering/exiting through the entrance/exit ports 111 are provided with an additional sealing cuff which seals against entrance/exit ports 111.

Fig. 1d depicts a front view of the optical fibre organizer 1, wherein different types of frames 200, 300, 400 have been mounted against the front support members 121a, 122a. As seen, the frames 200, 300, 400 span the horizontal H separation of the support members 121a, 122a. In some implementations, the frames 200, 300, 400 spanning the horizontal H separation of the support members 121a, 122a while being attached to the support members 121a, 122a facilitates structural stability of the optical fibre organizer 1. The frames 200, 300, 400 can be arranged in any order along the support members 121a, 122a allowing a fully modular design which can be tailored after the specific use case. For instance, if many splitter modules must be retained one or more second frames 300 may be utilized. On the other hand, if there is a need for retaining fibre optic adaptors or organization/storage of large amounts of fibre optic cables one or more third frames 400 and/or first frames 200 provided with cable routers 210 can be used.

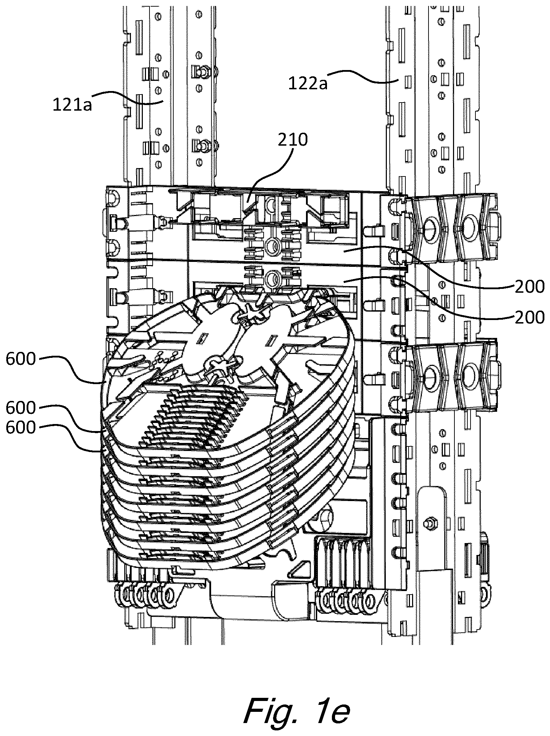

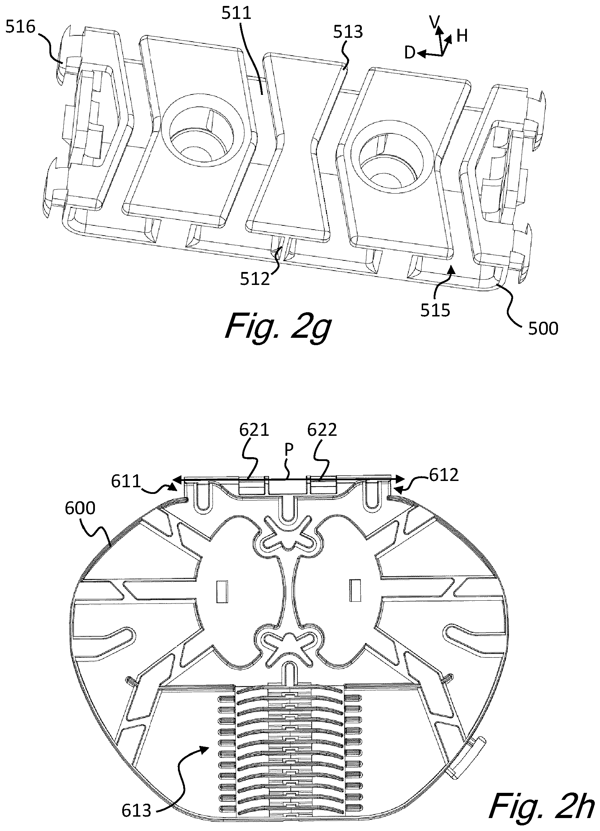

The first frame 200 is a frame configured to hold one or more pivotable splice trays using splice tray holders 201. However, as it is preferable to provide additional fibre cable routing capabilities a fibre router 210 is mounted to the splice tray holders 201 of the first frame 200 in a non-pivotable manner. In some implementations, the fibre router 210 leaves at least some splice tray holders 201 of the first frame 200 accessible to engage additional splice trays. An exemplary splice tray is described in further detail in connection to fig. 2h, and in fig. 1e a plurality of splice tray holders pivotably connected to a plurality of first frames 200 are shown.

The second frame 300 comprises apertures for receiving a splitter module holder 310 configured to elastically retain at least one splitter module extending in the horizontal H direction. To this end, the capacity for holding splitter modules is easily expanded by adding additional second frames 300 to the optical fibre organizer 1.

The third frame 400 comprises a plurality of adaptor apertures 401 configured to receive a fibre optic adaptor. The fibre optic adaptor in turn being configured to connect a terminated optical fibre connected to the fibre optic adaptor on a front side of the third frame to another terminated optical fibre connected to the fibre optic adaptor on a rear side of the third frame. The third frame 400 may be referred to as a patch-frame as it allows fibre patch connections. Accordingly, the optical fibre organizer 1 may enable a space efficient way of retaining connectorized optical fibres using the third frame 400, while still allowing access to the connection and routing capabilities of other frames 200, 300.

Fig. 1e depicts an optical fibre organizer with a plurality of first frames 200 attached to the support members 121a, 122a. One of the first frames 200 has a non-pivotable cable router 210 attached to the splice tray holders but has multiple splice tray holders accessible for pivotably holding a splice tray 600. Another first frame 200 is mounted just below the above frame 200 and holds multiple pivotable splice trays 600 in the splice tray holders. The pivoting splice trays 600 are arranged in a stack which fibre installation personnel can flip through to access the fibres of individual splice trays 600.

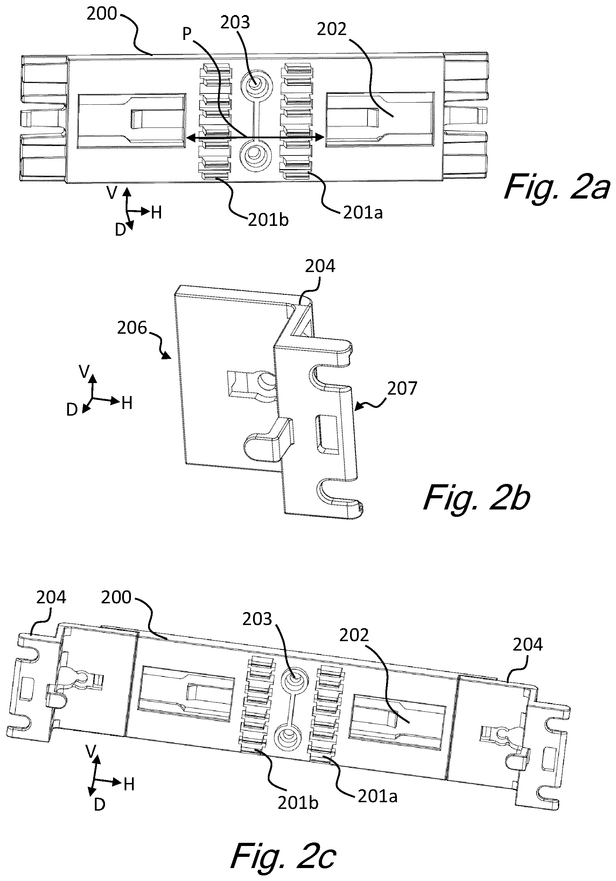

Fig. 2a depicts a first frame 200 according to some implementations. The first frame 200 is substantially flat and substantially rectangular in shape, having two longer opposed vertically V separated edges (defining the vertical V extension of the frame 200) and two shorter opposed horizontally H separated edges (defining the horizontal H extension of the frame 200). The first frame 200 further comprises a plurality of splice tray holders 201a, 201b separated along the vertical V axis. The splice tray holders 201a, 201b are preferably aligned along a same vertical V axis. Each splice tray holder 201a, 201b is configured to pivotably connect to a splice tray enabling the splice tray to pivot around a pivot axis P, the pivot axis P being parallel with the horizontal H axis of the first frame 200.

In some implementations, the splice tray holders 201a, 201b are formed as pairs, wherein adjacent splice tray holder pairs 201a, 201b are arranged with some vertical V separation from each other and the splice tray holders 201a, 201b of each pair are separated along the horizontal H axis. Each splice tray holder pair 201a, 201b is configured to pivotably connect to a splice tray enabling the splice tray to pivot around a pivot axis P, the pivot axis being parallel with the horizontal H axis. To this end, the first frame 200 allows pivotable retention of multiple splice trays, each splice tray engaging a separate pair of splice tray holders 201a, 201b and pivoting about a respective pivot axis P. The pivot axis P of two adjacent splice trays is displaced along the vertical axis V allowing the pivotable splice trays to be stacked.

The splice tray holders 201a, 201b are in one embodiment formed as claws, each splice tray holder 201a, 201b then comprising a top claw portion and a bottom claw portion wherein a member of a splice tray is inserted to each claw and retained by prohibiting linear motion of the splice tray relative the first frame 200 while still allowing the splice tray to pivot around the pivot axis P. The claw portions may be flexibly resilient, allowing them to be temporarily displaced (opened) when a splice tray is inserted and then close around the splice tray to retain it. In some implementations, the splice trays comprise pins that are inserted into the splice tray holders 201a, 201b.

With further reference to fig. 2b and fig. 2c a support bracket 204 is depicted. In some implementations, the first frame 200 is configured to be releasably connected to two such support brackets 204, wherein each support bracket 204 connects to the short horizontally H separated sides of the first frame 200. In this manner, the first frame 200 is effectively extended, by the support brackets 204 in the horizontal H direction. Additionally, the support brackets 204 allows the first frame 200 to be displaced along the depth axis D. Each support bracket 204 is connected at a first end 206 to the first frame 200. At a second end 207 of the support bracket 204, opposite to the first end 206, the support bracket 204 extends along the depth axis D so as to extend in front of the first frame 200. That is, the support brackets comprise an L-section so as to cover the splice tray holders 201a, 201b along a horizontal H projection. In some implementations, the first frame 200 is only attached to the elongated support members via the support brackets 204. In other words, the first frame 200 as such is not in direct contact with any elongated support members but only in indirect contact via the support brackets 204.

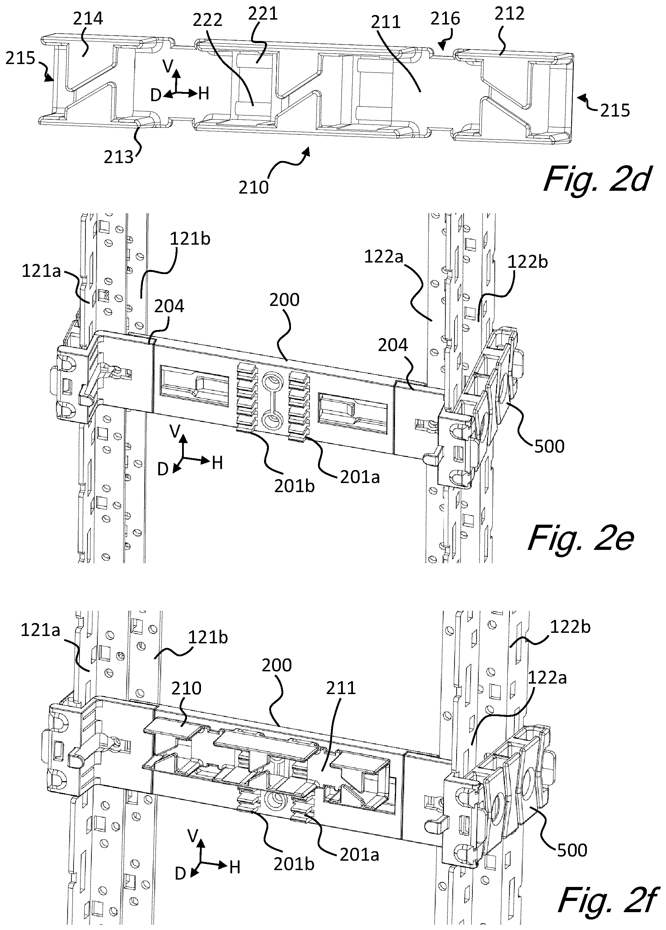

In fig. 2d a cable router 210 is depicted. The cable router 210 comprises a base plate 211. Additionally, the cable router 210 comprises a lower wall 213 and an upper wall 212 attached at the vertical V edges of the base plate 211. The lower wall 213 and upper wall 212 extends in parallel along the depth axis D, but are separated along the vertical axis V. Thus, the cable router 210 defines a substantially rectangular trench for guiding optical fibres and/or optical cables. The lower wall 213 and upper wall 212 form at least two horizontally oriented openings 215 allowing optical fibres to be routed in and out of the cable router 210 along the horizonal H axis. The lower wall 213 and upper wall 212 are further provided with gaps defining at least one vertically V oriented opening allowing optical fibres to be routed in/out of the cable router 210 along the vertical axis V in addition to the fibres being routed in/out along the horizontal axis H through the horizontally oriented openings 215.

The cable router 210 further comprises one or more retention lips 214 being substantially parallel with the base plate 211 but displaced therefrom along the depth axis D to retain fibre optical cables not only along the vertical axis V, between the upper wall 212 and lower wall 213, but also along the depth axis D between the retention lip(s) 214 and the base plate 211.

The separation between the lower wall 213 and upper wall 212 may be equal to or greater than the distance between two vertically displaced splice tray holders of the first frame 200. Thus, at least two, vertically separated, holding means 221, 222 may be provided on the cable router 210 allowing it to be mounted to the splice tray holders of the first frame 200 in a manner which prohibits the cable router 210 from pivoting when mounted. In fig. 2d, the holding means 221, 222 are formed inside slits in the base plate 211 and comprise an elongated member which splice tray holders 201a, 201b of the first frame 200 can grip.

In fig. 2e the first frame 200 has been mounted to the elongated support members 121, 122 using support brackets 204. Preferably, the elongated support members 121a, 122a are L-shaped so as to contact the support brackets 204 across a majority of the L-section of the support brackets 204.

With further reference to fig. 2f a cable router 210 has been attached to the splice tray holders 201a, 201b of the first frame 200. Preferably, the cable router 210 connects to at least two splice tray holders 201a, 201b wherein the at least two splice tray holders 201a, 201b are separated along the vertical axis V. This means that the cable router 210 is reliantly attached to the first frame 200 and prohibited from pivoting.

As seen, the base plate 211 of cable router 210 is arranged in a plane substantially parallel, and in front of, the first frame 200. Additionally, at least one splice tray holder 201a, 201b of the first frame 200 remains accessible after cable router 210 has been attached to the first frame 200. This allows at least one splice tray to be pivotably retained above or below the cable router 210 allowing splice trays to be used in conjunction with the cable router 210 on a same first frame 200. Fig. 2f also shows a lateral cable router 500 attached to the lateral side of one pair of support members 122a, 122b. The lateral cable router 500 may act both as a lateral cable router and a structural element which helps retaining the frames. In some implementations, the lateral cable router 500 is configured to mechanically engage a support bracket (see fig. 2b) connected to a frame 200 arranged against the front support members 121a, 122a and mechanically engage a support bracket connected to another frame 200 arranged against the back support members 121b, 122b. In some implementations, two lateral cable routers 500 are arranged to couple to the support brackets of a first frame 200 mounted on both the front and back sides of the first plane. That is, one lateral cable router 500 is arranged at each pair of support members 121a, 121b, 122a, 122b.

In fig. 2g the lateral cable router 500 is shown in further detail. The lateral cable router 500 comprises a base plate 511 and one or more walls 512 projecting from the base plate 511 to form vertical fibre optic routing channels 515. When the lateral cable router 500 is installed, the base plate extends 511 in a plane spanned by the depth axis D and vertical axis V and allows support for optical fibres routed vertically V, along the lateral sides of the support members 121a, 121b and/or vertical support members 122a, 122b. As seen, the lateral cable router 500 comprises engagement means 516 for engaging a support bracket 204 (shown in fig. 2e.) on one side and engaging another support bracket on the opposite side so as to reliantly retain two support brackets (and by extension two frames) placed on the front side and rear side of the optical fibre organizer respectively. That is, the lateral cable router 500 does not only enable vertical routing of optical fibres but also facilitates structural stability and retention of frames.

In fig. 2h an exemplary pivotable splice tray 600 is shown. The splice tray 600 comprises engagement means 621, 622 for pivotably engaging the splice tray holders (which e.g. are claw-shaped) of the first frame. When installed, the splice tray 600 pivots around the pivot axis P to allow an installer to access other splice trays 600 arranged below or above while still allowing the splice trays 600 to be packed in a dense stack when not accessed. Preferably, the splice tray 600 is configured to enable optical fibres to enter the splice tray close to pivot axis P as this puts less strain on the optical fibres when the splice tray 600 is pivoted with the optical fibres organized inside. In the splice tray 600 shown in fig. 2h the optical fibre enters/exits the splice tray 600 at openings 611, 612 that are in close proximity to the pivot axis P. The inside of the splice tray 600 comprises a plurality of fibre routing structures allowing optical fibres to be coiled and organized. Furthermore, the splice tray 600 comprises at least one splice holder 613 for retaining a fibre optic splice. In some implementations, each splice tray 600 is further provided with a closable lid for covering the fibre routing structures after organization of a particular splice tray has been completed.

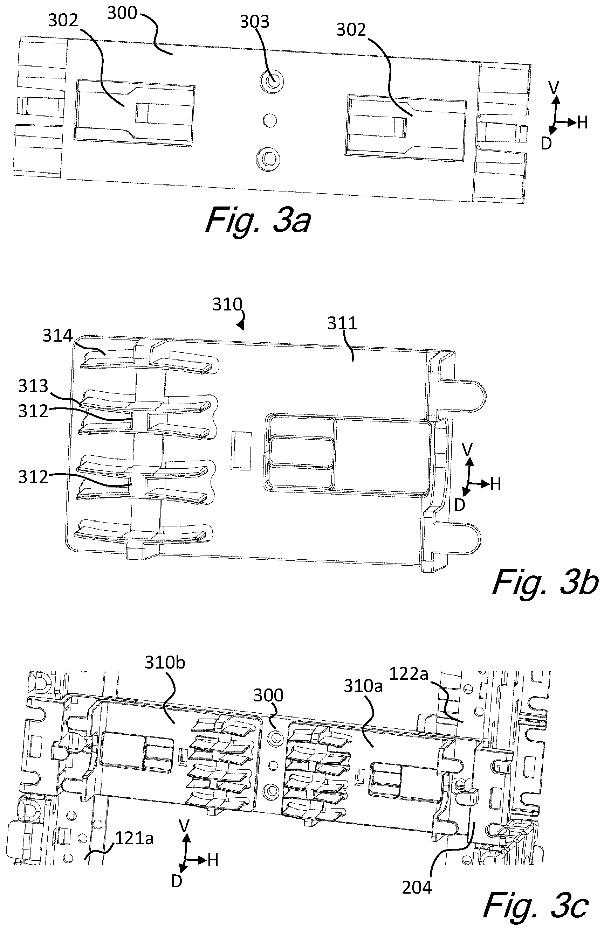

Fig. 3a depicts a second frame 300 configured to be mounted to the elongated support members, optionally using two support brackets 204 as described in connection to fig. 2a and fig. 2b in the above.

Similar to the first frame, the second frame 300 is also substantially rectangular with shorter horizontally H separated sides and longer vertically V separated sides. Different from the first frame the second frame 300 does not comprise any splice tray holders and instead features a substantially flat front surface with one or more splitter holder retention ports 302 for connecting to a splitter module holder.

With further reference to fig. 3b an example of such a splitter module holder 310 is shown. The splitter module holder 310 comprises coupling means for connecting to the splitter holder retention port 302 of the second frame 300 to releasably lock the splitter module holder 310 in place. The splitter module holder 310 comprises a base plate 311 extending in a plane parallel to the second frame 300 (i.e. parallel to a vertical V and horizontal H plane) when mounted to the second frame 300. The base plate 311 has a rear side, facing the second frame 200, and a front side, opposite to the rear side. The splitter module holder 310 further comprises at least two protrusions 312 projecting from the front side of the base plate 311 along the depth axis D. The at least two protrusions 312 are separated from each other allowing a splitter module to be retained between the at least two protrusions 312.

In some implementations, each protrusion 312 is attached to at least one flexible resilient C-shaped plate 313. Each C-shaped plate 313 has its convex side arranged against the protrusion 312 such that the concave sides of the C-shaped plates 313 of neighbouring protrusions 312 are facing each other. Each C-shaped plate 313 is attached to the protrusion 312 (e.g. along a centreline) at the convex side but not attached to the base plate 311 of the splitter module holder. To achieve the latter, the C-shaped plates 313 are suspended over the base plate 311 or the base plate is provided with and opening 314 just below each C-shaped plate 313.

As the C-shaped plates 313 of adjacent protrusions 312 have concave elastic sides which face each other a splitter module retention volume is formed between adjacent C-shaped plates 313. Due to the concave shape of the C-shaped plates 313, the splitter module retention volume is formed by a comparatively large vertical V separation close to the protrusions 312 and a comparatively small vertical V separation further away from the protrusions 312 along the horizontal axis H. However, as the C-shaped plates 313 are flexibly resilient, and as the C-shaped plates 313 are not attached to, but are separated from, the base plate 311 the C-shaped plates 313 will bend as a splitter module is forced into the splitter module retention volume. This will ensure that the splitter module is held in place while also enabling splitter modules of different vertical height to be installed in the same splitter module retention volume. Consequently, the optical fibre organizer becomes more versatile and allows a vast variety of splitter modules to be installed against a single splice module holder 310.

In fig. 3c the second frame 300 has been mounted to the support members 121a, 122a (using support brackets 204) and a splitter module holder 310a has been mounted to the second frame 300.

The second frame 300 comprises two holder retention ports 302, each configured to hold a splitter module holder 310a, 310b. The second frame 300 holds two splitter module holders 310a, 310b separated along the horizontal axis H. Preferably, the second frame 300 is configured to hold the splitter module holders 310a, 310b such that corresponding protrusions 312 (and optionally C-shaped plates 313) are aligned along the horizontal axis H. To this, end the two splitter module holders 310a, 310b can cooperate to hold one or more splitter modules which extend from one of the splitter module holders 310a to the other one of the splitter module holders 310b.

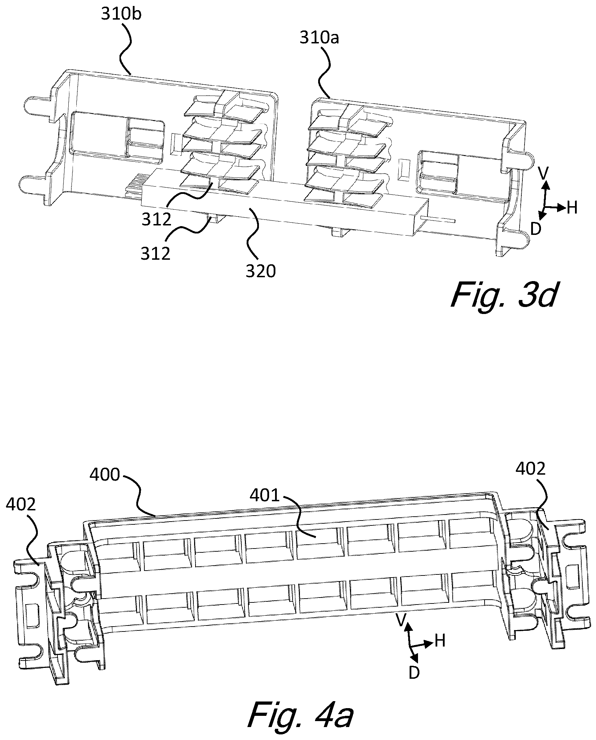

In fig. 3d an example of how two splitter module holders 310a, 310b can cooperate to hold a splitter module 320 is shown. As seen, the splitter module 320 is arranged between two protrusions 312 of one splitter module holder 310a and extends across to the second splitter module holder 310b where it also is retained between two neighbouring protrusions 312. Despite there being many possible sizes of the splitter modules 320, the flexible and elastic C-shaped plates are capable of retaining many different sizes without risking to cause any damage to the splitter module 320. Additionally, it is envisaged that an installer may choose to use one or two splitter module holders 310a, 310b depending on the fibre routing requirements. For example, if long splitter modules 320 are used it may be preferable to use two splitter module holders 310a, 310b and if small or few splitter modules are used it may be preferable to use only one splitter module holder 310a, 310b.

Fig. 4a depicts a third support 400 plate according to some implementations. The optical fibre organizer may comprise a third frame 400 attached to the support members 121, 122 and arranged above or below the first frame and/or second frame. The third frame 400 is an adaptor plate comprising a plurality of adaptor apertures 401 extending, along the depth axis D, from a front side of the third frame 400 to an opposite rear side of third frame 400.

Each adaptor aperture 401 is configured to receive at least one fibre optic adaptor. The fibre optic adaptor is configured to receive at the front side at least one connectorized optical fibre and optically connect the connectorized optical fibre to an auxiliary optical fibre extending away from the back side of the fibre optic adaptor. As seen in fig. 4a the third frame 400 comprises two horizontal H rows of eight adaptor apertures 401 enabling a total of sixteen adaptors to be retained, however this arrangement is merely exemplary, and the third frame 400 may comprise fewer or more adaptor apertures 401, each configured to hold one adaptor which in turn may connect to one, two or more optical fibres.

The third frame 400 further comprises two shield holding sections 402 which also is used to attach the third support 400 plate to the elongated members. The shield holding sections 402 are configured to releasably connect to a shield plate which covers the fibre optical adaptors and the connectorized optical fibres connected to the third frame 400.

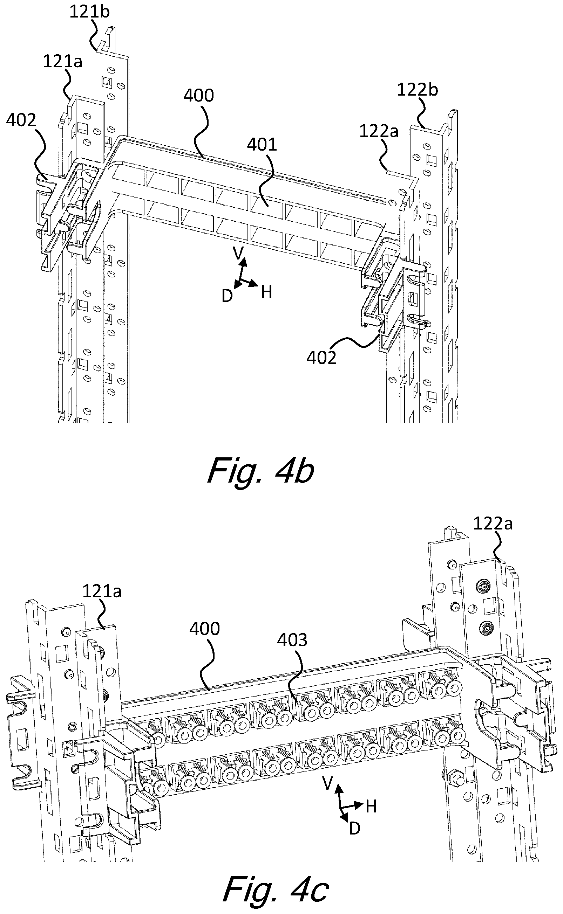

With further reference to fig. 4b and fig. 4c the third frame 400 has been attached to the front support members 121a, 122a. As the third frame 400 enables optical fibre routing from the front side to the back side of the optical fibre organizer it is envisaged that the third frame 400 is configured to place the fibre optic adaptors 403 in a plane being centred between the front support members 121a, 122a and back support members 121b, 122b. This places the adaptors 403 at a central position allowing the connectors of the connectorized fibres to be longer while still protecting the optical fibres which hang from the adaptors 403. Accordingly, while the first or second frame occupies one position on a front or back side of the optical fibre storage arrangement, and another first or second frame can be placed on the opposite side, the third frame prohibits any other frame from being arranged on the opposite side.

Fig. 4c also depicts exemplary adaptors 403 which receive two connectorized optical fibres. It is envisaged that each adaptor may alternatively be configured to receive one, or more than two connectorized optical fibres.

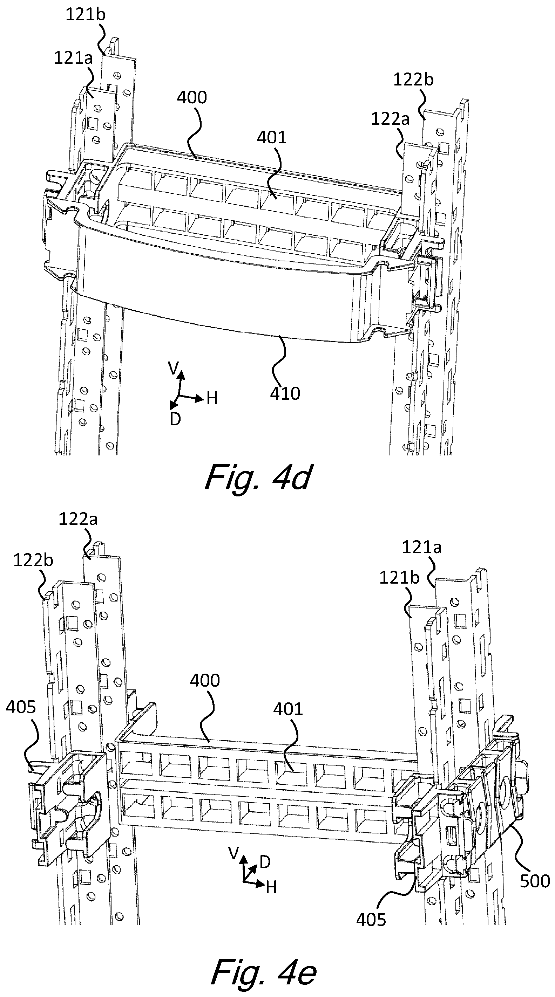

In fig. 4d a shield plate 410 is shown after having been connected to the third frame 400. As seen, the shield plate 410 covers the horizontal H and vertical V extension of the adaptor apertures projected along the depth axis D. The shield plate 410 is in its mounted position separated from the third frame 400 along the depth axis D to form a storage space wherein connectorized optical fibres can hang (after having been inserted into their corresponding adaptors) while still being protected from environment. The shield plate 410 is detachable, meaning that an installer may remove the shield plate 410 when working with routing fibre optic cables inside the optical fibre organizer and then reattach the shield plate when the work has been completed or when work on other parts of the optical fibre storage commences. To this end, the risk of damaging the fragile connectorized optical fibres connected to adaptors at the third frame 400 is greatly reduced.

As described in the above, the third frame 400 may prohibit a frame of being installed on the opposite side in line with the third frame 400. However, the optical fibres coming from the backside of the third frame 400 would also benefit from being protected. To this end, separate shield plate holders 405 as shown in fig. 4e may be arranged on the opposite side of the optical fibre organizer wherein a second shield plate is releasably connected to the shield plate holders 405.

**In** some implementations, the third frame 400 is configured to receive a shield plate against the front support members 121a, 122a, for protecting the connectorized optical fibres and the adaptors from the front side, and the optical fibre organizer further comprises two separate shield plate holders 405 attached to the rear support members 121b, 122b configured to hold a second shield plate for protecting the connectorized optical fibres and the adaptors from the back side. In some embodiments, the shield plate holders 405 are connected to the third support 400 plate via at least one lateral cable router 500. The lateral side router 500 spans the depth D separation of the front and back support members 121a, 122a, 121b, 122b and has at least one optical fibre routing channel defined for routing optical fibres along the vertical direction on a lateral side of the optical fibre storage arrangement. In some implementations, the third frame 400 and each shield plate holder 405 is configured for snap-engagement with the lateral cable router 500.

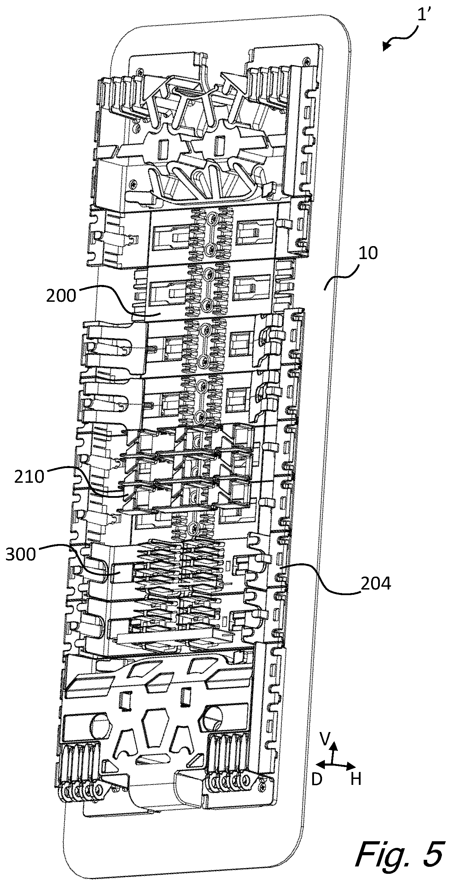

Fig. 5 depicts an alternative optical fibre organizer 1' wherein the support structure is realized as a support board 10. Instead of mounting the first or second frame 200, 300 on two support members it is envisaged that the first and/or second frame 200, 300 may be mounted against a support board 10. The support board 10 may be a plate or a surface which in turn is mounted against a ceiling, wall or floor of an indoor environment. Alternatively, the support board 10 may be a wall, ceiling or floor of an indoor environment whereby the first and/or second frames 200, 300 are mounted directly against the wall, ceiling or floor. For instance, the support board 10 may be inside of a fibre optic terminal box which commonly is mounted against a wall and comprises a door to seal-off an indoor environment.

With further reference to fig. 2a and fig 3a, it is seen that the first and second frames 200, 300 comprises one or more screw holes 203, 303 making the first and second frames 200, 300 suitable for fastening these frames directly against a supporting board 10. The optional support brackets 204 from fig. 2b may also be used, to define a cable routing space when the frames 200, 300 are fastened against the support board 10.

All of the benefits and features described in connection to the first and second frame 200, 300 above (e.g. the first frame 200 holding a cable router 210 and/or one or more splice trays) when mounted against support members are still valid for the optical fibre organizer 1' mounted against a support board 10. Additionally, the first and second frame 200, 300 have the added benefit of being usable for different optical fibre storage arrangements which enhances the versatility and makes it possible to reuse the first or second frame 200, 300 for other applications.

The person skilled in the art realizes that the present invention by no means is limited to the preferred embodiments described above. On the contrary, many modifications and variations are possible within the scope of the appended claims. For example, the optical fibre organizer may comprise at least one of a first frame, a second frame or a third frame. That is, while embodiments comprising a combination of the first, second and third frame is the focus of the above description it is envisaged that some embodiments may only feature the e.g., the second frame and the splitter module holder (s).

## Claims

1. An optical fibre organizer (1) for managing optical fibre cables comprising:
a support structure (10, 121a, 122a) arranged in a first plane (A) spanned by a vertical and a horizontal axis,
a first frame (200) mounted to the support structure (10, 121a, 122a), the first frame (200) extending in a frame plane being parallel to the first plane (A), the first frame having a plurality of splice tray holders (201a, 201b) arranged on a front surface of the frame (200), the splice tray holders (201a, 201b) being configured to engage a splice tray (600) and enable the splice tray (600) to pivot around a pivot axis (P) parallel with the horizontal axis,
**characterised by**
a fibre router (210), the fibre router (210) comprising attachment means (221, 222) for releasable and non-pivotable attachment to the splice tray holders (201a, 201b) of the first frame (200), the fibre router (210) further comprising:
a base plate (211) extending parallel to the first frame (200) when the fibre router is attached to the first frame (200),
a lower and upper wall (212, 213) attached to vertical edges of the base plate (211), the lower and upper wall being separated along the vertical axis to define a fibre routing channel along the horizontal axis, the fibre routing channel being configured to retain a plurality of optical fibres.

2. The optical fibre organizer (1) according to claim 1, wherein the fibre router (210) further comprises:
at least one retention lip (214) protruding from at least one of the lower wall (213) and upper wall (212) and extending towards the other one of the lower wall (213) and upper wall (212), wherein the retention lip (214) is separated from the base plate (211) along a depth axis, the depth axis being perpendicular to the horizontal axis and vertical axis.

3. The optical fibre organizer (1) according to claim 1 or claim 2, wherein the first frame (200) is mounted to the support structure (10, 121a, 122a) via at least two support brackets (204), the at least two support brackets (204) being releasably connected to the first frame (200).

4. The optical fibre organizer (1) according to any of the preceding claims, wherein the attachment means of the fibre router (210) are configured to engage at least two splice tray holders (201a, 201b) of the first frame (200) separated along the vertical axis.

5. The optical fibre organizer (1) according to any of the preceding claims,
wherein the first frame (200) comprises at least one splice tray holder which remains accessible when the fibre router (210) is mounted to at least one other splice tray holder.

6. The optical fibre organizer (1) according to claim 5, wherein a fibre optic splice tray (600) is pivotably attached to the accessible splice tray holder.

7. The optical fibre organizer (1) according to any of the preceding claims, further comprising:
a second frame (300) mounted to the support structure and extending in the frame plane, the second frame being arranged vertically above or below the first frame (200),
wherein at least one splitter module holder (310a, 310b) is detachably connected to the second frame (300), the at least one splitter module holder (310a, 310b) being configured to hold at least one fibre splitter module (320).

8. The optical fibre organizer (1) according to claim 7, wherein the at least one splitter module holder (310a, 310b) comprises a plurality of holder plates (313) extending in a depth axis away from the second frame (300), the depth axis being perpendicular to the horizontal axis and vertical axis, and
wherein the holder plates (313) are flexibly resilient and separated to define at least one vertical separation space adapted to receive and reliantly hold the fibre splitter module (320) in the separation space.

9. The optical fibre organizer (1) according to claim 7 or claim 8, wherein said at least one splitter module holder (310a, 310b) is at least two splitter module holders (310a, 310b), the at least two splitter module holders (310a, 310b) being separated along the horizontal axis.

10. The optical fibre organizer (1) according to claim 8 when depending on claim 7, wherein said at least two splitter module holders (310a, 310b) are aligned to define a common vertical separation space extending horizontally to at least partially cover said at least two splitter module holders (310a, 310b).

11. The optical fibre organizer (1) according to any of the preceding claims, wherein the support structure comprises:
a pair of elongated support members (121a, 122a) extending substantially in parallel along a vertical axis, wherein the support members (121a, 122a) are separated from each other along a horizontal axis such that the support members (121a, 122a) are arranged parallel to the first plane (A) spanned by the vertical and horizontal axes.

12. The optical fibre organizer (1) according to claim 11, further comprising:
a third frame (400) mounted to the elongated support members and extending in a plane parallel to the frame plane, the third frame being arranged vertically above or below the first frame,
the third frame comprises a plurality of adaptor apertures (401), each adaptor aperture (401) being configured to receive a fibre optic adaptor (403), the fibre optic adaptor (403) being configured to connect a terminated optical fibre connected to the fibre optic adaptor (403) on a front side of the third frame (400) to another terminated optical fibre connected to the fibre optic adaptor on a rear side of the third frame (400), the front side being opposite to the rear side.

13. The optical fibre organizer (1) according to claim 12, wherein the third frame (400) comprises a holding portion (402) for connecting to a shield plate (410),
wherein, when the shield plate (410) is connected to the holding portion (402), the shield plate (410) extends in a plane parallel to the frame plane on the front side of the third frame (400) and covers the horizontal and vertical extent of the plurality of adaptor apertures (401).

14. The optical fibre organizer (1) according to claim 13, further comprising:
a second pair of elongated support members (121b, 122b) extending substantially in parallel along the vertical axis, wherein the second support members (121b, 122b) are separated from each other along the horizontal axis such that the second support members (121b, 122b) are arranged in a second plane spanned by the vertical and horizontal axes separated along the depth axis from the first plane,
at least two auxiliary shield holders (405), attached to each one of the second support members (121b, 122b), wherein, when a second shield plate (410) is connected to the auxiliary shield holders, the second shield plate (410) extends in a plane parallel to the frame plane on the rear side of the third frame and covers the horizontal and vertical extent of the plurality of adaptor apertures (401).

15. The optical fibre organizer (1) according to any of claims 11 - 14, wherein the support members (121a, 122a, 121b, 122b) are disposed inside a housing (130), and
wherein the housing (130) is connected to a base portion (110) attached to a lower end of the support members (121a, 122a, 121b, 122b), the base portion (110) comprising at least one cable entrance opening (111).

## Patentansprüche

1. Lichtleiterorganisator (1) zum Managen der Lichtleiterkabel, aufweisend:
eine Trägerstruktur (10, 121a, 122a), angeordnet in einer ersten Ebene (A), die durch eine vertikale und eine horizontale Achse überspannt ist,
einen ersten Rahmen (200), der an der Trägerstruktur (10, 121a, 122a) montiert ist, wobei sich der erste Rahmen (200) in einer Rahmenebene erstreckt die parallel zu der ersten Ebene (A) ist, wobei der erste Rahmen mehrere Splice-Trägerhalterungen (201a, 201b) aufweist, die an einer Vorderfläche des Rahmens (200) angeordnet sind, wobei die Splice-Trägerhalterungen (201a, 201b) eingerichtet sind, in einen Splice-Träger (600) einzugreifen und das Schwenken des Splice-Trägers (600) um eine Schwenkachse (P) parallel zu der horizontalen Achse zu ermöglichen, **gekennzeichnet durch**
einen Faserrouter (210), wobei der Faserrouter (210) Befestigungsmittel (221, 222) für trennbare und nicht schwenkbare Befestigung an den Splice-Trägerhalterungen (201a, 201b) des ersten Rahmens (200) aufweist, der Faserrouter (210) ferner aufweisend:
eine Grundplatte (211), die sich parallel zu dem ersten Rahmen (200) erstreckt, wenn der Faserrouter an dem ersten Rahmen (200) befestigt ist,
eine untere und eine obere Wand (212, 213), die an vertikalen Kanten der Grundplatte (211) befestigt sind, wobei die untere und die obere Wand entlang der vertikalen Achse getrennt sind, um einen Faserführungskanal entlang der horizontalen Achse zu definieren, wobei der Faserführungskanal eingerichtet ist, um mehrere Lichtleiter aufzunehmen.

2. Lichtleiterorganisator (1) nach Anspruch 1, wobei der Faserrouter (210) ferner aufweist:
mindestens eine Rückhaltelippe (214), die von mindestens einer aus der unteren Wand (213) und der oberen Wand (212) vorspringt und sich in Richtung der anderen aus der unteren Wand (213) und der oberen Wand (212) erstreckt, wobei die Rückhaltelippe (214) von der Grundplatte (211) entlang einer Tiefenachse getrennt ist und die Tiefenachse rechtwinklig zu der horizontalen Achse und der vertikalen Achse verläuft.

3. Lichtleiterorganisator (1) nach Anspruch 1 oder Anspruch 2, wobei der erste Rahmen (200) an der Trägerstruktur (10, 121a, 122a) über mindestens zwei Trägerklammern (204) montiert ist, wobei die mindestens zwei Trägerklammern (204) trennbar mit dem ersten Rahmen (200) verbunden sind.

4. Lichtleiterorganisator (1) nach einem der vorhergehenden Ansprüche, wobei die Befestigungsmittel des Faserrouters (210) eingerichtet sind, in mindestens zwei Splice-Trägerhalterungen (201a, 201b) des ersten Rahmens (200) einzugreifen, die entlang der vertikalen Achse getrennt sind.

5. Lichtleiterorganisator (1) nach einem der vorhergehenden Ansprüche, wobei der erste Rahmen (200) mindestens eine Splice-Trägerhalterung aufweist, die zugänglich bleibt, wenn der Faserrouter (210) an mindestens einer anderen Splice-Trägerhalterung montiert ist.

6. Lichtleiterorganisator (1) nach Anspruch 5, wobei der Lichtleiter-Splice-Träger (600) schwenkbar an der zugänglichen Splice-Trägerhalterung befestigt ist.

7. Lichtleiterorganisator (1) nach einem der vorhergehenden Ansprüche, ferner aufweisend:
einen zweiten Rahmen (300), der an der Trägerstruktur montiert ist und sich in die Rahmenebene erstreckt, wobei der zweite Rahmen vertikal über oder unter dem ersten Rahmen (200) angeordnet ist,
wobei mindestens eine Splittermodulhalterung (310a, 310b) trennbar an dem zweiten Rahmen (300) befestigt ist und die mindestens eine Splittermodulhalterung (310a, 310b) eingerichtet ist, um mindestens ein Fasersplittermodul (320) zu halten.

8. Lichtleiterorganisator (1) nach Anspruch 7, wobei die mindestens eine Splittermodulhalterung (310a, 310b) mehrere Halterplatten (313) aufweist, die sich in einer Tiefenachse von dem zweiten Rahmen (300) weg erstrecken, wobei die Tiefenachse rechtwinklig zu der horizontalen Achse und der vertikalen Achse ist, und
wobei die Halterplatten (313) flexibel widerstandsfähig und getrennt sind, um mindestens einen vertikalen Trennungsraum zu definieren, der angepasst ist, das Fasersplittermodul (320) in dem Trennungsraum aufzunehmen und zuverlässig zu halten.

9. Lichtleiterorganisator (1) nach Anspruch 7 oder Anspruch 8, wobei die mindestens eine Splittermodulhalterung (310a, 310b) mindestens zwei Splittermodulhalterungen (310a, 310b) ist und die mindestens zwei Splittermodulhalterungen (310a, 310b) entlang der horizontalen Achse getrennt sind.

10. Lichtleiterorganisator (1) nach Anspruch 8, abhängig von Anspruch 7, wobei die mindestens zwei Splittermodulhalterungen (310a, 310b) ausgerichtet sind, um einen gemeinsamen vertikalen Trennungsraum zu definieren, der sich horizontal erstreckt, um mindestens teilweise die mindestens zwei Splittermodulhalterungen (310a, 310b) abzudecken.

11. Lichtleiterorganisator (1) nach einem der vorhergehenden Ansprüche, wobei die Trägerstruktur aufweist:
ein Paar langgestreckte Trägerelemente (121a, 122a), die sich im Wesentlichen parallel entlang einer vertikalen Achse erstrecken, wobei die Trägerelemente (121a, 122a) voneinander entlang einer horizontalen Achse getrennt sind, sodass die Trägerelemente (121a, 122a) parallel zu der ersten Ebene (A) angeordnet sind, die durch die vertikale und die horizontale Achse überspannt wird.

12. Lichtleiterorganisator (1) nach Anspruch 11, ferner aufweisend:
einen dritten Rahmen (400), der an den langgestreckten Trägerelementen montiert ist und sich in einer Ebene erstreckt, die parallel zu der Rahmenebene verläuft, wobei der dritte Rahmen vertikal über oder unter dem ersten Rahmen angeordnet ist,
der dritte Rahmen mehrere Adapteröffnungen aufweist (401), wobei jede Adapteröffnung (401) eingerichtet ist, einen Lichtleiteradapter (403) aufzunehmen und der Lichtleiteradapter (403) eingerichtet ist, einen angeschlossenen Lichtleiter, der an einer Vorderseite des dritten Rahmens (400) mit dem Lichtleiteradapter (403) verbunden ist, mit einem anderen angeschlossenen Lichtleiter zu verbinden, der an einer Rückseite des dritten Rahmens (400) mit dem Lichtleiteradapter verbunden ist, wobei die Vorderseite der Rückseite gegenüberliegt.

13. Lichtleiterorganisator (1) nach Anspruch 12, wobei der dritte Rahmen (400) einen Halteabschnitt (402) zum Anschließen einer Schirmplatte (410) aufweist,
wobei, wenn die Schirmplatte (410) mit dem Halteabschnitt (402) verbunden ist, die Schirmplatte (410) sich in einer Ebene parallel zu der Rahmenebene auf der Vorderseite des dritten Rahmens (400) erstreckt, und die horizontale und die vertikale Erstreckung der mehreren Adapteröffnungen (401) abdeckt.

14. Lichtleiterorganisator (1) nach Anspruch 13, ferner aufweisend:
ein zweites Paar langgestreckter Trägerelemente (121b, 122b), die sich im Wesentlichen parallel entlang der vertikalen Achse erstrecken, wobei die zweiten Trägerelemente (121b, 122b) voneinander entlang der horizontalen Achse getrennt sind, sodass die zweiten Trägerelemente (121b, 122b) in einer zweiten Ebene angeordnet sind, die durch die vertikale und die horizontale Achse überspannt werden, die entlang der Tiefenachse von der ersten Ebene getrennt sind,
mindestens zwei Hilfsschirmhalterungen (405), die an jedem der beiden Trägerelemente (121b, 122b) befestigt sind, wobei, wenn eine zweite Schirmplatte (410) mit den Hilfsschirmhalterungen verbunden ist, sich die zweite Schirmplatte (410) in einer Ebene erstreckt, die parallel zu der Rahmenebene an der Rückseite des dritten Rahmens ist und die horizontale und vertikale Erstreckung der mehreren Adapteröffnungen (401) abdeckt.

15. Lichtleiterorganisator (1) nach einem der Ansprüche 11 bis 14, wobei die Trägerelemente (121a, 122a, 121b, 122b) in einem Gehäuse (130) angeordnet sind, und
wobei das Gehäuse (130) mit einem Basisabschnitt (110) verbunden ist, der an einem unteren Ende der Trägerelemente (121a, 122a, 121b, 122b) befestigt ist, der Basisabschnitt (110) aufweisend mindestens eine Kabeleintrittsöffnung (111).

## Revendications

1. Organiseur de fibres optiques (1) destiné à gérer des câbles à fibres optiques, comprenant :
une structure de support (10, 121a, 122a) disposée dans un premier plan (A) enjambé par un axe vertical et un axe horizontal,
un premier cadre (200) monté sur la structure de support (10, 121a, 122a), le premier cadre (200) s'étendant dans un plan de cadre parallèle au premier plan (A), le premier cadre comportant une pluralité de supports de plateau d'épissure (201a, 201b) disposés sur une surface avant du cadre (200), les supports de plateau d'épissure (201a, 201b) étant configurés pour venir en prise avec un plateau d'épissure (600) et permettre au plateau d'épissure (600) de pivoter autour d'un axe de pivotement (P) parallèle à l'axe horizontal,
**caractérisé par**
un routeur de fibres (210), le routeur de fibres (210) comprenant des moyens de fixation (221, 222) pour une fixation amovible et non pivotante aux supports de plateau d'épissure (201a, 201b) du premier cadre (200), le routeur de fibres (210) comprenant en outre :
une plaque de base (211) s'étendant parallèlement au premier cadre (200) lorsque le routeur de fibres est fixé au premier cadre (200),
des parois inférieure et supérieure (212, 213) fixées aux bords verticaux de la plaque de base (211), les parois inférieure et supérieure étant séparées le long de l'axe vertical pour définir un canal d'acheminement de fibres le long de l'axe horizontal, le canal d'acheminement de fibres étant configuré pour retenir une pluralité de fibres optiques.

2. Organiseur de fibres optiques (1) selon la revendication 1, dans lequel le routeur de fibres (210) comprend en outre :
au moins une lèvre de retenue (214) faisant saillie de la paroi inférieure (213) et/ou de la paroi supérieure (212) et s'étendant vers l'autre parmi la paroi inférieure (213) et la paroi supérieure (212), la lèvre de retenue (214) étant séparée de la plaque de base (211) le long d'un axe de profondeur, l'axe de profondeur étant perpendiculaire à l'axe horizontal et à l'axe vertical.

3. Organiseur de fibres optiques (1) selon la revendication 1 ou la revendication 2, dans lequel le premier cadre (200) est monté sur la structure de support (10, 121a, 122a) par l'intermédiaire d'au moins deux consoles de support (204), lesdites au moins deux consoles de support (204) étant reliées de manière amovible au premier cadre (200).

4. Organiseur de fibres optiques (1) selon l'une quelconque des revendications précédentes, dans lequel les moyens de fixation du routeur de fibres (210) sont configurés pour s'engager dans au moins deux supports de plateau d'épissure (201a, 201b) du premier cadre (200) séparés le long de l'axe vertical.

5. Organiseur de fibres optiques (1) selon l'une quelconque des revendications précédentes, dans lequel le premier cadre (200) comprend au moins un support de plateau d'épissure qui reste accessible lorsque le routeur de fibres (210) est monté sur au moins un autre support de plateau d'épissure.

6. Organiseur de fibres optiques (1) selon la revendication 5, dans lequel un plateau d'épissure de fibres optiques (600) est fixé de manière pivotante au support de plateau d'épissure accessible.

7. Dispositif organiseur de fibres optiques (1) selon l'une quelconque des revendications précédentes, comprenant en outre :
un deuxième cadre (300) monté sur la structure de support et s'étendant dans le plan du cadre, le deuxième cadre étant disposé verticalement au-dessus ou au-dessous du premier cadre (200),
au moins un support de module séparateur (310a, 310b) étant relié de manière amovible au deuxième cadre (300), l'au moins un support de module séparateur (310a, 310b) étant configuré pour retenir au moins un module séparateur de fibres (320).

8. Organiseur de fibres optiques (1) selon la revendication 7, dans lequel l'au moins un support de module séparateur (310a, 310b) comprend une pluralité de plaques de support (313) s'étendant dans un axe de profondeur à l'écart du deuxième cadre (300), l'axe de profondeur étant perpendiculaire à l'axe horizontal et à l'axe vertical, et
les plaques de support (313) étant flexibles et élastiques et séparées de manière à définir au moins un espace de séparation vertical conçu pour recevoir et maintenir de manière fiable le module séparateur de fibres (320) dans l'espace de séparation.

9. Organiseur de fibres optiques (1) selon la revendication 7 ou la revendication 8, dans lequel ledit au moins un support de module séparateur (310a, 310b) est constitué par au moins deux supports de module séparateur (310a, 310b), les au moins deux supports de module séparateur (310a, 310b) étant séparés le long de l'axe horizontal.

10. Organiseur de fibres optiques (1) selon la revendication 8 lorsqu'elle dépend de la revendication 7, dans lequel lesdits au moins deux supports de module séparateur (310a, 310b) sont alignés pour définir un espace de séparation vertical commun s'étendant horizontalement pour recouvrir au moins partiellement lesdits au moins deux supports de module séparateur (310a, 310b).

11. Organiseur de fibres optiques (1) selon l'une quelconque des revendications précédentes, dans lequel la structure de support comprend :
une paire d'éléments de support allongés (121a, 122a) s'étendant sensiblement parallèlement le long d'un axe vertical, les éléments de support (121a, 122a) étant séparés l'un de l'autre le long d'un axe horizontal de sorte que les éléments de support (121a, 122a) soient disposés parallèlement au premier plan (A) enjambé par les axes vertical et horizontal.

12. Dispositif d'organisation de fibres optiques (1) selon la revendication 11, comprenant en outre :
un troisième cadre (400) monté sur les éléments de support allongés et s'étendant dans un plan parallèle au plan du cadre, le troisième cadre étant disposé verticalement au-dessus ou au-dessous du premier cadre, le troisième cadre comprenant une pluralité d'ouvertures d'adaptateur (401), chaque ouverture d'adaptateur (401) étant configurée pour recevoir un adaptateur de fibres optiques (403), l'adaptateur de fibres optiques (403) étant configuré pour connecter une fibre optique terminée connectée à l'adaptateur de fibres optiques (403) sur un côté avant du troisième cadre (400) à une autre fibre optique terminée connectée à l'adaptateur de fibres optiques sur un côté arrière du troisième cadre (400), le côté avant étant opposé au côté arrière.

13. Organiseur de fibres optiques (1) selon la revendication 12, dans lequel le troisième cadre (400) comprend une section de retenue (402) pour la connexion à une plaque de blindage (410),
lorsque la plaque de blindage (410) est reliée à la section de retenue (402), la plaque de blindage (410) s'étendant dans un plan parallèle au plan du cadre sur le côté avant du troisième cadre (400) et recouvrant l'étendue horizontale et verticale de la pluralité d'ouvertures d'adaptateur (401).

14. Organiseur de fibres optiques (1) selon la revendication 13, comprenant en outre : une seconde paire d'éléments de support allongés (121b, 122b) s'étendant sensiblement parallèlement le long de l'axe vertical, dans lequel les seconds éléments de support (121b, 122b) sont séparés l'un de l'autre le long de l'axe horizontal de telle sorte que les seconds éléments de support (121b, 122b) soient disposés dans un second plan enjambé par les axes vertical et horizontal séparés le long de l'axe de profondeur du premier plan,
au moins deux supports de blindage auxiliaires (405), fixés à chacun des seconds éléments de support (121b, 122b), sachant que, lorsqu'une seconde plaque de blindage (410) est connectée aux supports de blindage auxiliaires, la seconde plaque de blindage (410) s'étend dans un plan parallèle au plan du cadre sur le côté arrière du troisième cadre et recouvre l'étendue horizontale et verticale de la pluralité d'ouvertures d'adaptateur (401).

15. Organiseur de fibres optiques (1) selon l'une quelconque des revendications 11 à 14, dans lequel les éléments de support (121a, 122a, 121b, 122b) sont disposés à l'intérieur d'un logement (130), et
le boîtier (130) est relié à une partie de base (110) fixée à une extrémité inférieure des éléments de support (121a, 122a, 121b, 122b), la partie de base (110) comprenant au moins une ouverture d'entrée de câble (111).
